# EUROPEAN PATENT APPLICATION

(11) **EP 4 316 681 A1**
(43) Date of publication of application: **07.02.2024**
(21) Application number: 22188743.3
(22) Date of filing: 04.08.2022
(51) Int. Cl.: B21D 15/12, B21D 53/06, B21D 9/15, F28D 1/047, H01M 10/643, H01M 10/6552, H01M 10/6556

(54) **METHOD FOR PRODUCING A CORRUGATED FLAT TUBE MADE OF METAL**

(71) Applicant: MAHLE International GmbH, 70376 Stuttgart (DE)
(72) Inventor: Obsadny, Krzysztof, 63-440 Raszkow (PL); Sperling, Rafal, 63-400 Ostrow (PL); Szymanski, Michal, 63-400 Ostrow (PL)
(74) Representative: BRP Renaud & Partner mbB Rechtsanwälte Patentanwälte Steuerberater

(57) **Abstract**

The invention relates to a method for producing a corrugated flat tube (1) made of metal, with which
- initially a straight flat tube (1) is made,
- the straight flat tube (1) is filled with an initially liquid fluid (6),
- the liquid fluid (6) is solidified,
- the flat tube (1) with the solidified fluid (6') arranged therein is corrugated,
- the solidified fluid (6') is liquefied,
- the liquid fluid (6) is removed.

## Description

The present invention relates to a method for producing a corrugated flat tube made of metal. The invention additionally relates to a flat tube according to the invention produced according to this method and to an electrical energy store having at least one such flat tube.

Through an increasing electrification of motor vehicles, efficient cooling systems for cooling energy stores of such electrified motor vehicles become increasingly necessary. In modern energy stores, so-called pouch cells or cylindrical battery cells are often employed, which on the front side for example are connected to a cooling plate for cooling. A respective front side of such a cylindrical battery cell however is comparatively small so that cooling via a lateral surface would be significantly more effective. However, with a so-called indirect cooling, in the case of which a cooling fluid is not in direct contact with the battery cell to be cooled, this is only possible by way of a large-surface contact of cooling elements with the battery cell. To date, for example heat exchanger elements have been employed for this purpose which makes possible an improved transfer of heat from an inherently straight flat tube to the cylindrical battery cells.

Disadvantageous with this however is that such heat exchanger elements do not only require installation space but also provide additional weight which in particular in the case of electrical vehicles makes for a reduced range. Alternatively, corrugated flat tubes can also be used whose shape is adapted to an external shape of the cylindrical battery cell so that a flat contact is made possible. However, such corrugated flat tubes can only be produced exclusively according to the extrusion method and thus require a minimum wall thickness which is significantly greater than for example with folded flat tubes. Because of the greater wall thickness, a transfer of heat of such extruded flat tubes is also reduced. Compared with folded flat tubes, extruded flat tubes additionally have an increased resource requirement and an increased weight, which on the one hand renders the electric vehicle inherently more expensive and on the other hand reduces its range.

The present invention therefore deals with the problem of stating a method by means of which corrugated metallic flat tubes can be produced in a weight-optimised, resource-saving yet simple manner at the same time.

According to the invention, this problem is solved through the subject of the independent Claim 1. Advantageous further developments are subject of the dependent claims.

The present invention is based on the general idea of easily producing a corrugated flat tube, in which a straight flat tube produced by extrusion or bent from a metal strip is first subsequently bent over and corrugated. For example this is achieved in that the initially straight flat tube of for example a thin metal strip is filled with a fluid solidifying under certain conditions, for example a water-containing, an electrorheological or a magnetorheological fluid, which is solidified and a corrugating of the flat tube then takes place with solidified fluid. By way of this, it can be reliably avoided that the comparatively thin webs or walls of the metallic flat tube folded in such a manner collapse or that the flat tube suffers damage in some other way. The term "flat tube" according to the invention should of course also be understood to include tubes that have a rectangular cross-section or an oval or even round cross-section. With the method according to the invention for producing a corrugated flat tube made of metal, a straight flat tube is initially bent out of a metal strip, for the purpose of which for example conventional folding and soldering devices can be used. As mentioned, the flat tube can alternatively be produced by extrusion or as a welded flat tube. The flat tube substantially produced conventionally is subsequently filled, with the method according to the invention, with an initially liquid fluid which is subsequently solidified, upon which in turn the flat tube is subsequently corrugated with the solidified fluid arranged therein. Once the flat tube has assumed its corrugated shape, the still solid fluid is liquefied and drained. The fluid thus serves exclusively for supporting the structures of the flat tube during the corrugation process and reliably preventing a collapsing, for example of tube walls or of webs. With the method according to the invention it is possible for the first time to produce corrugated flat tubes as so-called folded tubes and for this purpose use a merely comparatively thin metal strip or generally a thin metal strip which makes not only possible a comparatively low weight and requires a comparatively low use of resources, but additionally ensures also a high transfer of heat. Compared with extruded flat tubes, which are corrugated after the extrusion, the corrugated flat tube produced with the method according to the invention can be produced significantly more cost-effectively, in particular since a use of material compared with an extruded flat tube can be significantly reduced.

In an advantageous further development of the method according to the invention, the still straight flat tube is initially filled with a liquid fluid which, as a function of temperature, changes phase. Following this, the still straight flat tube is cooled down until the fluid becomes solid, i.e. it reaches or falls below for example a freezing point. Following this, the flat tube with the solid fluid therein is corrugated until it has assumed its desired shape. Again following this, the now corrugated flat tube is heated until the solid fluid becomes liquid again for example, when using water, up to above the freezing point so that the liquid fluid can then be drained. For this purpose, for example a fluid which comprises water or generally is water can be used for this purpose. Because of this, a comparatively simple handling of the method according to the invention is possible, since for solidifying the fluid the flat tube with the fluid arranged therein merely has to be cooled down to below the freezing point. This can take place actively, but also passively and thus in a low-energy manner through a suitable storage at room temperature. The advantage of water or water-containing fluid additionally is that it is an ecologically completely harmless and yet cost-effective fluid. Obviously, other fluids can also be employed which solidify as a function of temperature or become liquid again.

In a further alternative embodiment of the method according to the invention, the initially straight flat tube is filled with a liquid and magnetorheological fluid. Following this, a magnetic field is generated or applied to the fluid until the magnetorheological fluid becomes solid. Again following this, the still straight flat tube can be corrugated. Once the flat tube has reached its corrugated shape, the magnetic field is switched off and the solid magnetorheological fluid thus liquefied again, upon which it can be drained.

Usually, magnetorheological liquids have magnetically polarisable particles, for example iron powder, which are finely distributed in a carrier fluid. Upon applying a magnetic field, the particles are polarised and form chains in the direction of the field lines which result in a solidification of the fluid. Compared with a fluid changing phase as a function of temperature, such a magnetorheological fluid offers the major advantage that a phase change by applying or switching off a magnetic field is extremely quickly and reversibly possible. In particular, there is no waiting for the freezing or thawing of the fluid, as is the case with a fluid changing phase as a function of temperature.

In a further alternative embodiment of the method according to the invention, the initially still straight flat tube is filled with a liquid and electrorheological fluid as fluid. Following this, an electric voltage or a current is applied until the electrorheological fluid becomes solid. Following this, the flat tube can be corrugated. Once the flat tube has assumed its corrugated shape, the voltage is switched off upon which the initially still solid electrorheological fluid becomes liquid again. Following this, the electrorheological fluid can be drained. Similar to the use of a magnetorheological fluid it is also possible with such an electrorheological fluid to comparatively quickly change between a solid state and a liquid state, as a result of which a high process speed can be achieved.

The straight flat tube can initially be a straight multi-chamber flat tube which is bent out of a metal strip, wherein this multi-chamber flat tube comprises a longitudinal seam with at least one folded web, which comprises walls with a common contact surface and a web back, which is at least connected to an inner wall of the multi-chamber flat tube.

Alternatively the straight flat tube is a single chamber flat tube or a multi chamber flat tube produced by extrusion, or the straight flat tube is a single chamber flat tube which is bent out of a metal strip.

In a further advantageous embodiment of the method according to the invention, the flat tube is corrugated in such a manner that it has a meandering shape. Such a meandering shape has multiple bends which are shaped in particular complementarily to an external contour of a, for example, cylindrically configured battery cell. Because of this, a large surface contact of the corrugated multi-chamber flat tube with the battery cells to be cooled and thus a particularly effective cooling is possible.

Prior to the filling with fluid, a folded flat tube, especially a folded multi chamber flat tube, is practically soldered along a longitudinal seam. Such a soldering also takes place already with straight multi-chamber flat tubes known to date from the prior art and has therefore been tested over many years and can be carried out with top quality.

Further, the present invention is based on the general idea of stating a corrugated flat tube which was produced with the method described in the preceding paragraphs or a folded and corrugated flat tube. This corrugated single or multi-chamber flat tube produced according to the invention has the major advantage that, because of the comparatively thin metal strips used, it is formed in a resource-saving and thus cost-effective yet weight-optimised manner. However, the substantial advantage of such a flat tube produced with the method according to the invention lies in the comparatively thin wall thickness and the high transfer of heat connected with this.

Practically, the flat tube can be formed of steel or aluminium. Here, aluminium in particular offers the possibility of forming the flat tube weight-optimised on the one hand and with high heat conductivity on the other hand.

Further, the present invention is based on the general idea of equipping an electrical energy store, in particular a traction battery of an electric vehicle, having at least one battery cell and having at least one cooling system, with at least one flat tube according to the preceding paragraphs, wherein this at least one flat tube is corrugated in such a manner that it lies flat against the at least one battery cell, in particular against the lateral surface of the same. Because of this, a particularly effective cooling of the battery cell can take place, as a result of which the efficiency of the electric vehicle can be significantly increased. Compared with conventional cooling systems, the cooling system with the corrugated flat tube produced according to the invention can also be constructed in a resource-saving and thus, with respect to a material usage, cost-effective, weight-optimised and efficient manner at the same time.

Further important features and advantages of the invention are obtained from the subclaims, from the drawings and from the associated figure description by way of the drawings.

It is to be understood that the features mentioned above and still to be explained in the following cannot only be used in the respective combination stated but also in other combinations or by themselves without leaving the scope of the present invention.

Preferred exemplary embodiments of the invention are shown in the drawings and are explained in more detail in the following description, wherein same reference numbers relate to same or similar or functionally same components.

It shows, in each case schematically:
- Fig. 1: a flow diagram of a method according to the invention for producing a corrugated multi-chamber flat tube made of metal,
- Fig. 2: a straight multi-chamber flat tube folded out of a metal strip,
- Fig. 3: a representation as in Fig. 2, however with the liquid fluid still arranged therein,
- Fig. 4: a representation as in Fig. 3, however with the solid fluid arranged in the multi-chamber flat tube,
- Fig. 5: a corrugated multi-chamber flat tube with the solid fluid arranged therein,
- Fig. 6: a larger representation of the multi-chamber flat tube from Fig. 5,
- Fig. 7: a representation as in Fig. 5, however with the liquid fluid arranged in the multi-chamber flat tube,
- Fig. 8: a representation as in Fig. 7, however without fluid in the multi-chamber flat tube,
- Fig. 9: an energy store according to the invention with multi-chamber flat tube produced according to the invention,
- Fig. 10: a representation as in Fig. 8, however with a multi chamber flat tube produced by extension,
- Fig. 11: a representation as in Fig. 10, however with a single chamber flat tube produced by extension.

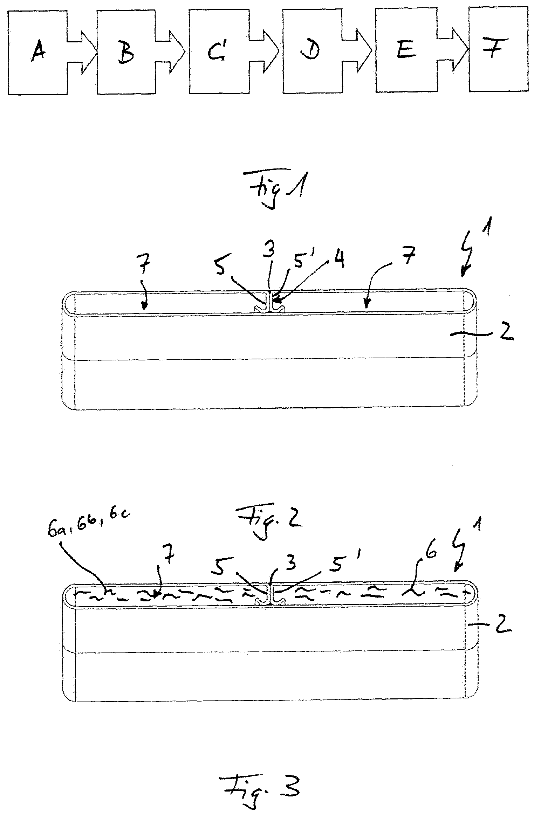

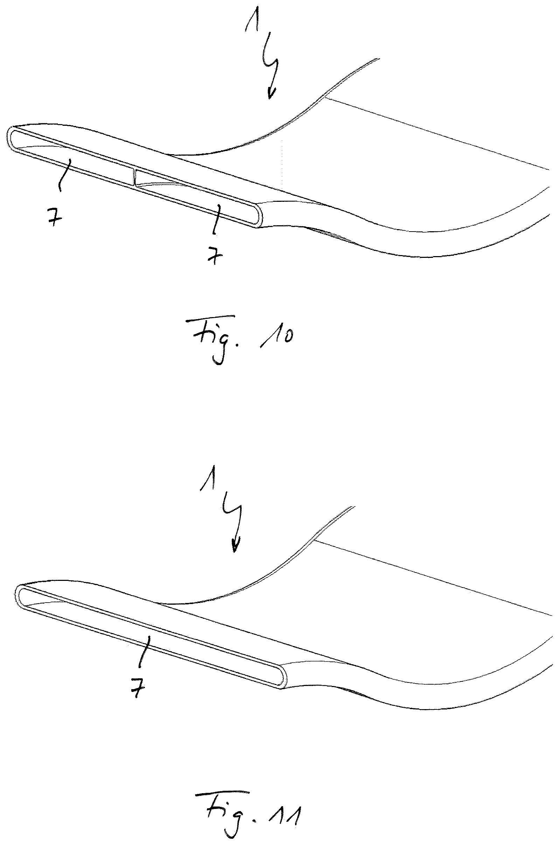

According to Fig. 1, a method according to the invention for producing a corrugated single or multi-chamber flat tube 1 made of metal, for example of steel or aluminium is shown. With the method according to the invention, a straight flat tube 1 is initially especially bent or folded out of a metal strip 2 in a method step A, as is shown for example according to Fig. 2 or is produced by extrusion (see Fig. 10). The flat tube 1 produced as a folded flat tube has a longitudinal seam 3 with at least one folded web 4, which comprises two walls 5, 5' with a common contact surface and a web back which is connected, for example soldered to at least one inner wall of the multi-chamber flat tube 1. The production of such a flat tube 1 has been known for many years. Such a flat tube could be also produced as a single chamber flat tube like the flat tube 1 shown in Fig. 11.

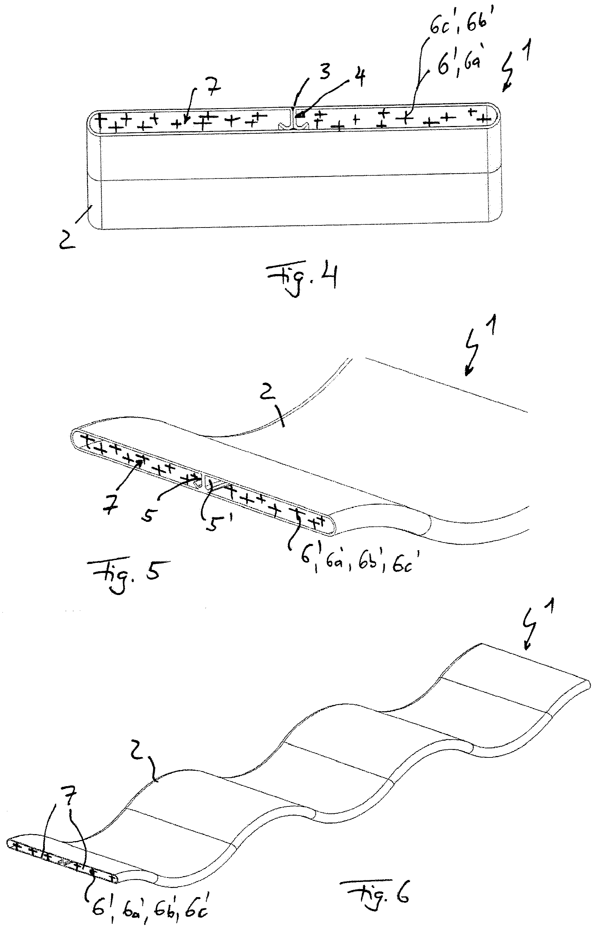

In the method step B, this flat tube 1, especially this multi chamber flat tube, is now filled with an initially liquid fluid 6 (see Fig. 3). This initially liquid fluid 6 is now solidified in method step C, which according to Fig. 4 is represented by "+" and marked with the reference number 6'. When the fluid 6' is solid, a corrugating of the flat tube 1 takes place in the method step D according to Fig. 5 and 6, wherein because of the now solid fluid 6' during the corrugating process no collapsing of the walls 5 or of the web 4 or of individual chambers 7 of the multi chamber flat tube has to be feared.

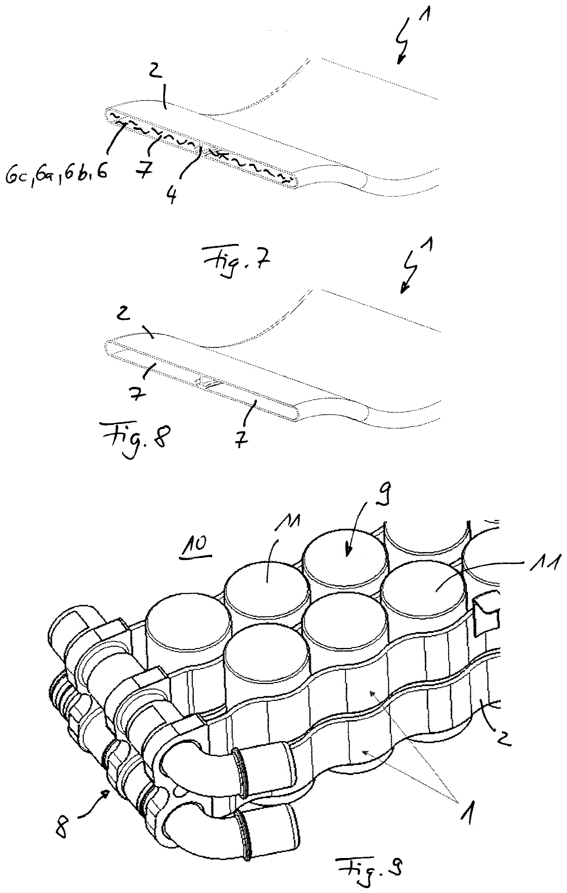

Once the flat tube 1, especially the multi chamber flat tube, has reached its corrugated shape (see Fig. 5 to 11), the solid fluid 6' is again liquefied in the method step E, which is shown according to Fig. 7. Following this, the now liquid fluid 6 is again removed from the flat tube 1 or the chambers 7 of the multi-chamber flat tube and the same still cleaned for example.

With the method according to the invention it is possible for the first time to also transfer extruded, bent or folded flat tubes 1, especially the multi chamber flat tubes, into a wave shape, which to date was only possible with significantly more expensive and significantly heavier extrusion profiles requiring a significantly greater use of resources. The flat tube 1, especially this multi chamber flat tube, according to the invention by contrast has a comparatively thin wall thickness as a result of which it does not only require a low use of material, which renders the flat tube 1 more cost-effective with respect to the material costs, but a comparatively light flat tube 1 can also be created, which is of great advantage in particular when used in a cooling system 8 of an electrical energy store 9, in particular in an electric vehicle 10 (see Fig. 9).

The electrical energy store 9 shown according to Fig. 9, which can be formed for example as traction battery of an electric vehicle 10, has at least one cylindrically shaped battery cell 11 with a round lateral surface, against which the flat tube 1, especially the multi chamber flat tube, produced with the method according to the invention can be placed in a flat manner and because of this transfer an optimum cooling effect. Alternatively a folded (bent over) and corrugated flat tube 1 can be used.

The phase-changing fluid 6, 6' can also be an initially liquid fluid 6a, 6a' which changes phase as a function of temperature, which is filled into the chambers 7 of the multi-chamber flat tube or in the flat tube 1 in the method step B. In the method step C, which is shown according to Fig. 4, this fluid 6a is now cooled down in such a manner that it now thickens or freezes and thus becomes solid. Following this, the flat tube 1, especially this multi chamber flat tube, is corrugated according to Fig. 5 and 6. By subsequently heading the flat tube 1, especially the multi chamber flat tube, the still solid fluid 6a' can be again liquefied in the method step E (see Fig. 7) and drained in the following method step F (see Fig. 8) out of the flat tube 1. In this case, the fluid 6a, 6a' used as fluid 6, 6' can comprise water or be water. This offers the major advantage that such a fluid 6a is not only cost-effective, but also extremely ecological.

Alternatively to this it is also conceivable that the fluid 6 is formed as magnetorheological fluid 6b, 6b', so that the same is filled in the method step B (see Fig. 3) in initially liquid form into the chambers 7 of the multi-chamber flat tube and subsequently transferred into a solid state by applying a magnetic field. With such a fluid 6, 6' formed as magnetorheological fluid 6b, 6b', the flat tube 1, especially the multi chamber flat tube, is also subsequently corrugated in the method step D, until it has the shape shown according to Fig. 5 to 11. This shape is matched for example to an outer contour of battery cells 11 of an energy store 9 to be cooled. Following this, the magnetic field is switched off in the method step E, upon which the still solid magnetorheological fluid 6b' again becomes liquid (see Fig. 7) in order to be then drained in the method step F (see Fig. 7, 8). Again alternatively it is also conceivable that the flat tube 1, especially the multi chamber flat tube, or its chambers 7 are filled with an initially liquid and electrorheological fluid 6c as fluid 6 in the method step B (see Fig. 3). Following this, an electrical voltage is applied in the method step C (see Fig. 4) until the electrorheological fluid 6c' is solid. The method step D now follows in the known manner, as a result of which the flat tube 1 with the solid fluid 6' formed as electrorheological fluid 6c' is corrugated. In the method step E (see Fig. 7), the voltage is now switched off, as a result of which the electrorheological fluid 6c' again becomes liquid so that in the method step F according to Fig. 8 it can be drained again out of the chambers 7 of the multi-chamber flat tube.

With the method according to the invention and with the flat tube 1, especially the single or multi chamber flat tube, produced with the method according to the invention it is possible for the first time to produce comparatively thin wall thicknesses and folded multi-chamber flat tubes made of sheet metal or multi-chamber flat tubes made of aluminium, which are not only more cost-effective and more resource-saving, but additionally also have a lower weight and an improved transfer of heat compared with multi-chamber flat tubes that are equally corrugated but produced by the extrusion method.

## Claims

1. A method for producing a corrugated flat tube (1) made of metal, with which
- initially a straight flat tube (1) is made,
- the straight flat tube (1) is filled with an initially liquid fluid (6),
- the liquid fluid (6) is solidified,
- the flat tube (1) with the solidified fluid (6') arranged therein is corrugated,
- the solidified fluid (6') is liquefied,
- the liquid fluid (6) is removed.

2. The method according to Claim 1,
**characterised in that**
- the flat tube (1) is filled with an initially liquid fluid (6a) that changes phase as a function of temperature as fluid (6),
- the flat tube (1) or the fluid (6a) is cooled down until the fluid (6a) becomes solid,
- the flat tube (1) is corrugated,
- the corrugated flat tube (1) is heated until the solid fluid (6a') becomes liquid again,
- the liquid fluid (6a) is drained.

3. The method according to Claim 1 or 2,
**characterised**
**in that** the fluid (6a) is water or comprises water.

4. The method according to Claim 1,
**characterised in that**
- the flat tube (1) is filled with an initially liquid and magnetorheological fluid (6b) as fluid (6),
- a magnetic field is applied until the magnetorheological fluid (6b) becomes solid,
- the flat tube (1) is corrugated,
- the magnetic field is switched off and the solid magnetorheological fluid (6b') becomes liquid again,
- the liquid magnetorheological fluid (6b) is drained.

5. The method according to Claim 1,
**characterised in that**
- the flat tube (1) is filled with an initially liquid and electrorheological fluid (6c) as fluid (6),
- an electrical voltage is applied until the electrorheological fluid (6c) becomes solid,
- the flat tube (1) is corrugated,
- the voltage is switched off and the solid electrorheological fluid (6c') becomes liquid again,
- the liquid electrorheological fluid (6c) is drained.

6. The method according to any one of the preceding claims,
**Characterised in that**
the flat tube (1) is corrugated in such a manner that it has a meandering shape.

7. The method according to any one of the preceding claims,
**characterised in that**
- the straight flat tube (1) is initially a straight multi-chamber flat tube which is bent out of a metal strip (2),
- the multi-chamber flat tube comprises a longitudinal seam (3) with at least one folded web (4), which comprises two walls (5, 5') with a common contact surface and a web back, which is at least connected to an inner wall of the multi-chamber flat tube.

8. The method according to Claims 1 to 6,
**Characterised in that**
- the straight flat tube (1) is a single chamber flat tube or a multi chamber flat tube produced by extrusion, or
- the straight flat tube (1) is a single chamber flat tube (1) which is bent out of a metal strip (2).

9. A flat tube (1), produced in accordance with the methods according to any one of the preceding claims, or a folded and corrugated flat tube.

10. The flat tube according to Claim 9,
**characterised**
**in that** the flat tube (1) is formed of steel or of aluminium.

11. An electrical energy store (9), in particular a traction battery of an electric vehicle (10), having at least one battery cell (11) and having at least one cooling system (8) with at least one flat tube (1) produced in accordance with the method according to any one of the Claims 1 to 8 which is corrugated in such a manner that it lies flat against an outer contour of at least one battery cell (11).
